# EUROPÄISCHE PATENTSCHRIFT

(11) **EP 4 257 742 B1**
(45) Veröffentlichungstag und Bekanntmachung des Hinweises auf die Patenterteilung: **06.05.2026**
(21) Anmeldenummer: 23161834.9
(22) Anmeldetag: 14.03.2023
(51) Int. Cl.: D06F 75/38, B05D 5/08

(54) **BÜGELSOHLE, BÜGELEISEN UND VERFAHREN ZUR HERSTELLUNG EINER BÜGELSOHLE**
IRONING SOLE, IRON AND METHOD FOR MANUFACTURING THE SOLE OF THE IRON
SEMELLE DE REPASSAGE, FER À REPASSER ET PROCÉDÉ DE FABRICATION D'UNE SEMELLE DE REPASSAGE

(30) Priorität: 04.04.2022 BE 202205250
(43) Veröffentlichungstag der Anmeldung: 11.10.2023
(73) Patentinhaber: Miele & Cie. KG, 33332 Gütersloh (DE)
(72) Erfinder: Heisenberger, Frank, 30559 Hannover (DE)

(56) Entgegenhaltungen:
- EP-A1- 0 510 546
- DE-A1- 19 800 956
- DE-A1- 3 617 034
- DE-A1- 4 410 410

## Beschreibung

Die Erfindung betrifft eine Bügelsohle, ein Bügeleisen und ein Verfahren zur Herstellung einer Bügelsohle. Bügelsohlen sind insbesondere aus Edelstahl, Teflon oder Keramik gefertigt. Eine Bügelsohle aus Edelstahl ist zwar haltbarer als eine Bügelsohle aus Keramik oder Teflon, weist aber Nachteile im Gleitverhalten auf. Eine Bügelsohle aus Teflon weist wiederum den Nachteil auf, an Metallgegenständen wie Reißverschlüssen, Knöpfen zu zerkratzen, wodurch sich die Gleiteigenschaften verschlechtern.

Derartige Bügelsohlen sind beispielsweise in der DE 44 10 410 A1 und der DE 36 17 034 A1 offenbart.

Der Erfindung stellt sich somit das Problem, eine Bügelsohle, ein Bügeleisen und ein Verfahren zur Herstellung einer Bügelsohle bereitzustellen, wobei die Bügelsohle gleichzeitig eine gute Haltbarkeit und gute Gleiteigenschaften aufweist.

Erfindungsgemäß wird dieses Problem durch eine Bügelsohle mit den Merkmalen des Patentanspruchs 1, ein Bügeleisen mit den Merkmalen des Patentanspruchs 5 und ein Verfahren mit den Merkmalen des Patentanspruchs 6 gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben einer Vereinigung von der Haltbarkeit mit den Gleiteigenschaften darin, dass durch die neue Oberfläche der Bügelsohle weitere Möglichkeiten bestehen, eine optimierte Dampfverteilung bereitzustellen. Zudem weist die Bügelsohle ein Alleinstellungsmerkmal in der optischen Erscheinung auf.

Die Erfindung betrifft eine Bügelsohle, die zwei Materialien aufweist, die in einer Abfolge von Gipfeln und Tälern angeordnet sind, wobei das erste Material der zwei Materialien in den Tälern angeordnet ist und das zweite Material der zwei Materialien auf den Gipfeln angeordnet ist. Dadurch können die Vorteile zweier Materialien kombiniert werden. Es wird eine hybride Bügelsohle bereitgestellt.

In einer bevorzugten Ausführungsform sind die zwei Materialien ausgewählt aus der Gruppe, bestehend aus Edelstahl, Teflon, Keramik und Aluminium. Während Edelstahl eine bessere Haltbarkeit aufweist, weisen Teflon, Keramik und Aluminium bessere Gleiteigenschaften auf. Aluminium weist allerdings eine relativ raue Oberfläche auf und ist schwer zu reinigen, aber dafür relativ preisgünstig. Edelstahl ist hingegen schwerer als Aluminium und ein relativ kratzfestes Material. Keramik ist relativ kostenintensiv, aber weist sehr gute Gleiteigenschaften auf. Teflon weist ebenfalls sehr gute Gleiteigenschaften auf und beugt Glanzbildung vor. Bevorzugt sind die zwei Materialien ausgewählt aus der Gruppe, bestehend aus Edelstahl und Teflon.

Erfindungsgemäß ist das erste Material Teflon und ist das zweite Material Edelstahl. Dadurch ist das haltbare Edelstahl auf den Gipfeln angeordnet und das gut gleitfähige Teflon in den Tälern angeordnet. Dadurch wird die Haltbarkeit mit der Gleitfähigkeit der Bügelsohle weiterhin gleichzeitig optimiert.

Bevorzugt weist die Sohle eine Wabenstruktur auf. Dadurch wird die Dampfverteilung verbessert.

Die Erfindung betrifft ferner ein Bügeleisen, das eine Bügelsohle nach einer oder mehreren der vorangehend beschriebenen Ausführungsformen aufweist.

Weiterhin betrifft die Erfindung ein Verfahren zur Herstellung einer Bügelsohle, aufweisend folgende Schritte
- Bereitstellen einer Sohle, die zwei Materialien aufweist,
- Lasergravieren der Sohle, so dass die zwei Materialien in einer Abfolge von Gipfeln und Tälern angeordnet werden und das erste Material der mindestens zwei Materialien in den Tälern angeordnet ist und das zweite Material der mindestens zwei Materialien auf den Gipfeln angeordnet ist.

In einer bevorzugten Ausführungsform sind die zwei Materialien ausgewählt aus der Gruppe, bestehend aus Edelstahl, Teflon, Keramik und Aluminium. Bevorzugter sind die zwei Materialien ausgewählt aus der Gruppe, bestehend aus Edelstahl und Teflon. Erfindungsgemäß ist das erste Material Teflon und ist das zweite Material Edelstahl.

Ein Ausführungsbeispiel der Erfindung ist in den Zeichnungen rein schematisch dargestellt und wird nachfolgend näher beschrieben. Es zeigt schematisch und nicht maßstabsgerecht
- Fig. 1: eine Teil-Draufsicht auf eine erfindungsgemäße Bügelsohle; und
- Fig. 2: eine Teil-Draufsicht auf eine weitere erfindungsgemäße Bügelsohle.

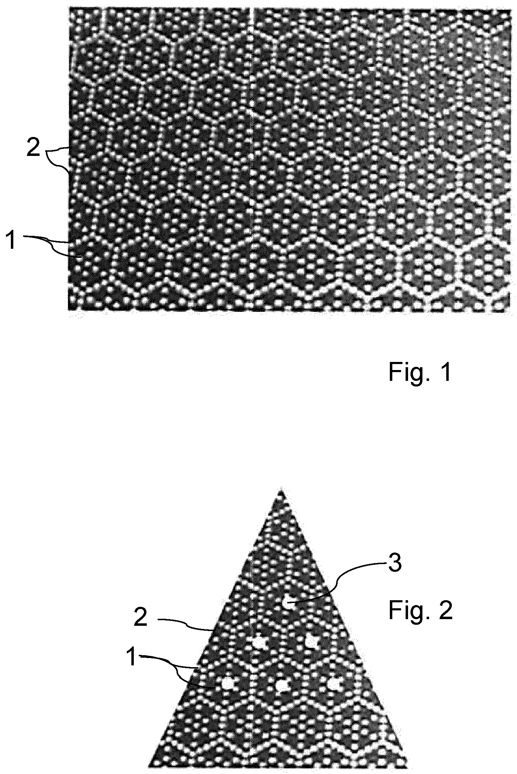

Fig. 1 zeigt eine Teil-Draufsicht auf eine erfindungsgemäße Bügelsohle. Die Bügelsohle weist einer Sohle auf, die zwei Materialien 1, 2 aufweist, die in einer Abfolge von Gipfeln und Tälern angeordnet sind. Das erste Material 1 der zwei Materialien 1, 2 ist in den Tälern angeordnet.

Das zweite Material 2 der zwei Materialien 1, 2 auf den Gipfeln angeordnet. Die Sohle weist eine Wabenstruktur auf, wobei die Gipfel und die Täler die einzelnen Waben bilden.

Fig. 2 zeigt eine Teil-Draufsicht auf eine weitere erfindungsgemäße Bügelsohle. Die in Fig. 2 gezeigte Bügelsohle entspricht der in Fig. 1 gezeigten Bügelsohle mit dem Unterschied, dass eine Bügelsohlen-Vorderteil mit einer spitz zulaufenden Form dargestellt ist und dass die Bügelsohle Öffnungen 3 zum Durchlassen von Dampf bei Betrieb aufweist.

### Bezugszeichenliste

- 1: erstes Material
- 2: zweites Material
- 3: Öffnung

## Patentansprüche

1. Bügelsohle, die zwei Materialien (1, 2) aufweist, die in einer Abfolge von Gipfeln und Tälern angeordnet sind, wobei das erste Material (1) der zwei Materialien (1, 2) in den Tälern angeordnet ist und das zweite Material (2) der zwei Materialien (1, 2) auf den Gipfeln angeordnet ist,
**dadurch gekennzeichnet, dass** das erste Material (1) Teflon ist und das zweite Material (2) Edelstahl ist.

2. Bügelsohle nach Anspruch 1, **dadurch gekennzeichnet, dass** die Bügelsohle eine Wabenstruktur aufweist.

3. Bügeleisen, aufweisend eine Bügelsohle nach einem der vorangehenden Ansprüche.

4. Verfahren zur Herstellung einer Bügelsohle nach Anspruch 1 oder 2, aufweisend folgende Schritte
- Bereitstellen einer Sohle, die zwei Materialien (1,2) aufweist,
- Lasergravieren der Sohle, so dass die zwei Materialien (1, 2) in einer Abfolge von Gipfeln und Tälern angeordnet werden und das erste Material (1) der mindestens zwei Materialien (1, 2) in den Tälern angeordnet ist und das zweite Material (2) der mindestens zwei Materialien (1, 2) auf den Gipfeln angeordnet ist.

## Claims

1. Iron soleplate comprising two materials (1, 2) which are arranged in a sequence of peaks and valleys, the first material (1) of the two materials (1, 2) being arranged in the valleys and the second material (2) of the two materials (1, 2) being arranged on the peaks,
**characterised in that** the first material (1) is Teflon and the second material (2) is stainless steel.

2. Iron soleplate according to claim 1, **characterised in that** the iron soleplate has a honeycomb structure.

3. Iron comprising an iron soleplate according to any of the preceding claims.

4. Method for manufacturing an iron soleplate according to claim 1 or 2, comprising the following steps
- providing a soleplate that comprises two materials (1, 2),
- laser engraving of the soleplate such that the two materials (1, 2) are arranged in a sequence of peaks and valleys and the first material (1) of the at least two materials (1, 2) is arranged in the valleys and the second material (2) of the at least two materials (1, 2) is arranged on the peaks.

## Revendications

1. Semelle pour fer à repasser qui présente deux matériaux (1, 2) disposés en une succession de sommets et de creux, dans laquelle le premier matériau (1) parmi les deux matériaux (1, 2) est disposé dans les creux et le second matériau (2) parmi les deux matériaux (1, 2) est disposé sur les sommets,
**caractérisée en ce que** le premier matériau (1) est du téflon et le second matériau (2) est de l'acier inoxydable.

2. Semelle pour fer à repasser selon la revendication 1,
**caractérisée en ce que** la semelle pour fer à repasser présente une structure alvéolaire.

3. Fer à repasser, présentant une semelle pour fer à repasser selon l'une des revendications précédentes.

4. Procédé pour la fabrication d'une semelle pour fer à repasser selon la revendication 1 ou 2, présentant les étapes suivantes
- fourniture d'une semelle qui présente deux matériaux (1, 2),
- gravure au laser de la semelle, de sorte que les deux matériaux (1, 2) sont disposés en une succession de sommets et de creux, et le premier matériau (1) parmi les au moins deux matériaux (1, 2) est disposé dans les creux et le second matériau (2) parmi les au moins deux matériaux (1, 2) est disposé sur les sommets.
